(19) Europäisches Patentamt
European Patent Office
Office européen des brevets

(11) EP 1 641 859 B1

(12) **EUROPÄISCHE PATENTSCHRIFT**

(45) Veröffentlichungstag und Bekanntmachung des Hinweises auf die Patenterteilung:
**11.01.2012 Patentblatt 2012/02**

(21) Anmeldenummer: **04739942.3**

(22) Anmeldetag: **16.06.2004**

(51) Int Cl.:
***C08G 18/80*** *(2006.01)* ***C08G 18/79*** *(2006.01)*
***C09D 175/04*** *(2006.01)* ***C08G 18/62*** *(2006.01)*

(86) Internationale Anmeldenummer:
**PCT/EP2004/006475**

(87) Internationale Veröffentlichungsnummer:
**WO 2005/000936 (06.01.2005 Gazette 2005/01)**

(54) **BLOCKIERTE POLYISOCYANATE**
BLOCKED POLYISOCYANATES
POLYISOCYANATES BLOQUES

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**HR LV**

(30) Priorität: **27.06.2003 DE 10328993**

(43) Veröffentlichungstag der Anmeldung:
**05.04.2006 Patentblatt 2006/14**

(73) Patentinhaber: **Bayer MaterialScience AG**
**51368 Leverkusen (DE)**

(72) Erfinder:
- **MAZANEK, Jan**
**51061 Köln (DE)**
- **HALPAAP, Reinhard**
**51519 Odenthal (DE)**
- **MECHTEL, Markus**
**51467 Bergisch Gladbach (DE)**
- **KLIMMASCH, Thomas**
**51379 Leverkusen (DE)**
- **THIEBES, Christoph**
**50670 Köln (DE)**

(56) Entgegenhaltungen:
**EP-A- 0 096 210** **EP-A- 0 247 443**
**DE-A- 19 750 186**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 641 859 B1

## Beschreibung

Die vorliegende Erfindung betrifft neue blockierte Polyisocyanate und selbstvernetzende Einkomponenten-Einbrennsysteme und ihre Verwendung zur Herstellung von Lacken, Farben, Klebstoffen und Elastomeren.

Der Einsatz von Blockierungsmitteln zum temporären Schutz von Isocyanatgruppen ist seit langem bekannt. Blockierte Polyisocyanate werden unter anderem zur Herstellung von bei Raumtemperatur lagerstabilen, in der Hitze aushärtenden Einkomponenten-Polyurethan-Einbrennsystemen (1K-PUR-Einbrennsystemen) eingesetzt. Die blockierten Polyisocyanate werden dabei z.B. mit Hydroxylgruppen enthaltenden Polyestern, Polyacrylaten, anderen Polymeren sowie weiteren Bestandteilen von Lacken und Farben wie Pigmenten, Colösern oder Additiven vermischt. Eine andere Form bei Raumtemperatur lagerstabiler Einbrennlacke sind selbstvernetzende Einbrennsysteme, die als Bindemittel Polymere enthalten, die in einem Molekül sowohl blockierte Isocyanate als auch Hydroxylgruppen enthalten.

Übersichten über den Einsatz von blockierten Polyisocyanaten finden sich beispielsweise in Wicks, Z. Progress in Organic Coatings 3 (1975) 73-99, Wicks, Z. Progress in Organic Coatings 9 (1981) 3-28 , D. A. Wicks and Z. W. Wicks, Progress in Organic Coatings, (1999), 148-172.

Die wichtigsten Verbindungen, die zur Blockierung von Polyisocyanaten eingesetzt werden, sind ε-Caprolactam, Methyl-ethyl-ketoxim (Butanonoxim), Malonsäurediethylester, sekundäre Amine sowie Triazol- und Pyrazolderivate, so wie sie z.B. in EP-A 0 576 952, EP-A 0 566 953, EP-A 0 159 117, US-A 4482 721, WO 97/12924 oder EP-A 0 744 423 beschrieben sind.

Sekundäre Amine werden als Blockierungsmittel in der EP-A 0 096 210 beschrieben. Dort werden allerdings lediglich Alkyl-, Cycloalkyl- und Aralkylgruppen enthaltende Amine als Blockierungsmittel ausdrücklich genannt. Amine, die funktionelle Gruppen mit Kohlenstoff-Heteroatom-Mehrfachbindungen oder Heteroatom-Heteroatom-Mehrfachbindungen enthalten, werden dort nicht explizit erwähnt. Die mit den in der EP-A 0 096 210 beschriebenen sekundären Aminen blockierten Polyisocyanate sind zudem nicht allgemein zur Herstellung von lösemittelhaltigen, bzw. hoch Festkörper-haltigen Lacken ("high solids"-Lacken), verwendbar, da sie in organischen Lösemitteln eine unzureichende Löslichkeit besitzen.

Die am häufigsten eingesetzten Blockierungsmittel für Isocyanate sind ε-Caprolactam und Butanonoxim. Während im Fall von ε-Caprolactam in der Regel Einbrenntemperaturen um 160°C oder höher angewandt werden, können blockierte 1K-PUR-Einbrennlacke, bei denen Butanonoxim als Blockierungsmittel eingesetzt wurde, schon bei 10 bis 20°C niedrigeren Temperaturen eingebrannt werden. Für moderne Lacksysteme wird jedoch eine weitere Absenkung der erforderlichen Einbrenntemperaturen angestrebt, um einerseits Energie zu sparen und die Einbrennöfen bei niedrigeren Temperaturen betreiben zu können und um andererseits auch temperaturempfindliche Substrate mit solchen 1K-PUR-Lacken beschichten zu können.

Blockierte Polyisocyanate, mit denen sich 1K-Einbrennsysteme mit niedrigeren Einbrenntemperaturen formulieren lassen, können durch Blockierung von Polyisocyanaten mit Malonsäurediethylester, 1,2,4-Triazol und Diisopropylamin hergestellt werden. Diese haben jedoch, den Nachteil, dass sie, insbesondere in Verbindung mit Polyisocyanaten auf Basis linear-aliphatischer Düsocyanate in organischen Lösungsmitteln nicht genügend löslich sind und aus diesen Lösungen auskristallisieren und somit nicht allgemein einsetzbar sind. Desweiteren lassen sich niedrig einbrennende 1K-PUR-Einbrennsysteme auf Basis mit 3,5-Dimethylpyrazol blockierter Polyisocyanate formulieren. Diese sind mit dem Nachteil behaftet, dass 3,5-Dimethylpyrazol bei Raumtemperatur ein Feststoff und somit schwer zu dosieren ist. Zur Dosierung in flüssiger Form muss es bei erhöhten Temperaturen in einem Lacklösemittel gelöst oder aufgeschmolzen werden, was einen zusätzlichen Arbeitsschritt darstellt. Es ist zwar aus EP-A 0 0713 871 ein Verfahren bekannt, mit 3,5-Dimethylpyrazol blockierte Polyisocyanate herzustellen, in dem man 3,5-Dimethylpyrazol in einem Lacklösemittel herstellt und die Reaktionslösung sofort zur Blockierung einsetzt, ohne einen Feststoff zu isolieren, jedoch ist bei diesem Verfahren ein erhöhter apparativer und/oder zeitlicher Aufwand und die Verwendung des krebserzeugenden Hydrazins für die Herstellung des Blockierungsmittels notwendig. Zudem ist es so nicht immer auszuschließen, dass Nebenprodukte der Herstellung von 3,5-Dimethylpyrazol in das Produkt gelangen und zu Beeinträchtigungen des Produktes, z.B. seiner Farbe, führen.

Der vorliegenden Erfindung lag daher die Aufgabe zugrunde, blockierte Polyisocyanate zu bereitzustellen, die die vorgenannten Nachteile des Standes der Technik nicht aufweisen und insbesondere eine niedrigere Vernetzungs- bzw. Einbrenntemperatur ermöglichen als Butanonoximblockierte Polyisocyanate, in organischen Lösungen kristallisationsstabil sind und sich auf einfache Weise herstellen lassen.

Diese Aufgabe wurde mit den erfindungsgemäßen, blockierten Polyisocyanaten und diese enthaltenden selbstvernetzenden Einkomponenten-Einbrennsystemen gelöst.

Gegenstand der vorliegenden Erfindung sind blockierte Polyisocyanate der Formel (I)

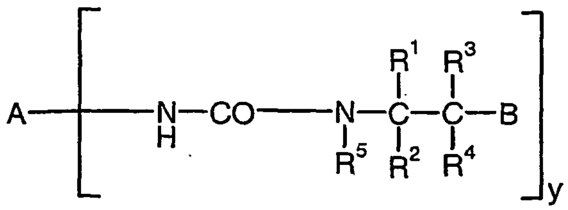 (I),

worin

| | |
|---|---|
| $R^1$-$R^4$ | gleich oder verschieden sein können und Wasserstoff, $C_1$-$C_6$-Alkyl oder Cycloalkyl bedeuten, |
| $R^5$ | $C_1$-$C_{10}$-Alkyl, $C_3$-$C_{10}$-Cycloalkyl bedeutet, |
| y | eine Zahl von 2 bis 8 bedeutet, |
| A | den Kern eines Isocyanats der Funktionalität y bedeutet, |
| B | für |

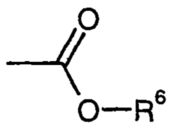 , 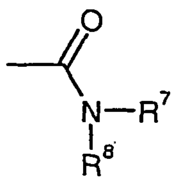 , 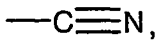 , 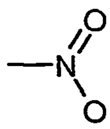 , 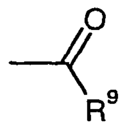 .

steht, wobei $R^6$-$R^8$ gleich oder verschieden sein können und unabhängig voneinander $C_1$-$C_6$-Alkyl und/oder $C_3$-$C_6$-Cycloalkyl bedeuten, $R^9$ Wasserstoff oder $C_1$-$C_6$-Alkyl oder $C_3$-$C_6$-Cycloalkyl bedeutet.

Gegenstand der Erfindung ist auch ein Verfahren zur Herstellung der blockierten Polyisocyanate der Formel (I) dadurch gekennzeichnet, dass Polyisocyanate mit der allgemeinen Formel (II)

$$A\text{-}[\text{-}N{=}C{=}O]_y \qquad (II),$$

worin A und y die unter Formel I angegebene Bedeutung haben,
mit sekundären Aminen der allgemeinen Formel (III)

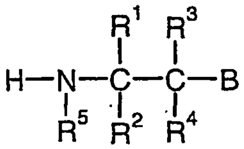 (III),

worin $R^1$- $R^5$ und B die bei Formel (I) genannte Bedeutung haben,
umgesetzt werden.

Ein weiterer Gegenstand der Erfindung ist die Verwendung der erfindungsgemäßen blockierten Polyisocyanate zur Herstellung von Lacken, Farben und anderen Einbrennsystemen wie Klebstoffen oder Elastomeren sowie als Zusatz bei der Vulkanisation von Kautschuken, sowie Verfahren zur Beschichtung von Substraten mit Lacken, die die erfindungsgemäßen blockierten Polyisocyanate enthalten, ferner Gegenstände aus diesen Materialien und mit diesen beschichtete Substrate.

Die Blockierungsmittel der Formel (III) lassen sich beispielsweise durch Reaktion von primären Aminen an Verbindungen mit aktivierten Kohlenstoff-KohlenstoffDoppelbindungen, wie sie beispielsweise in Organikum, 19. Auflage, Deutscher Verlag der Wissenschaften, Leipzig, 1993, Seiten 523 bis 525 beschrieben sind, herstellen. Dabei reagiert ein primäres Amin selektiv mit einer Kohlenstoff-Kohlenstoff-Doppelbindung zu einem sekundären, unsymmetrischen Amin. Bevorzugt verwendet man als Blockierungsmittel der Formel (III) Stoffe, die sich als Reaktionsprodukte im oben beschriebenen Sinne von sterisch gehinderten primären Alkylaminen, wie beispielsweise sec-Butylamin, tert-Butylamin, ggf. alkylsubstituiertes Cyclohexylamin, iso-Propylamin, Cyclopropylamin, den verzweigten oder cyclischen Isomeren des Pentyl-, Hexyl-, Heptyl-, Octyl- und Nonylamins oder Benzylamin und Verbindungen mit einer aktivierten Kohlenstoff-Kohlenstoffdoppelbindung, wie beispielsweise $\alpha,\beta$-ungesättigten Carbonsäurestern, $\alpha,\beta$-ungesättigten N, N-Carbonsäuredialkylamiden, Nitroalkenen, Aldehyden und Ketonen auffassen lassen. Besonders bevorzugt verwendet man Stoffe, die sich als Additionsprodukte von primären Aminen an Alkylester der Acryl-, Methacryl- und Crotonsäure, wie Methylmethacrylat, iso-Norbornylmethacrylat, Ethylmethacrylat, n-Propylmethacrylat, iso-Propylmethacrylat, n-Butylmethacrylat, iso-Butylmethacrylat, 2-Ethylhexylmethacrylat, Methylacrylat, Ethylacrylat, n-Propylacrylat, isoPropylacrylat, iso-Norbornylacrylat, n-Butylacrylat, tert-Butylacrylat, iso-Butylacrylat, 2-Ethylhexylacrylat, Crotonsäuremethylester, Crotonsäureethylester, Crotonsäurepropylester auffassen lassen.

Bevorzugt werden Stoffe verwendet, die sich als das Additionsprodukt von tert-Butylamin oder iso-Propylamin oder Cyclohexylamin an Methyl- oder Ethyl- oder Propyl- oder iso-Propyl- oder n-Butyl- oder iso-Butyl- oder tert-Butylester der Acryl- oder Methacryl- oder Crotonsäure auffassen lassen.

Besonders bevorzugt werden Stoffe verwendet, die sich als das Additionsprodukt von tert-Butylamin an Methylacrylat oder das Additionsprodukt von tert-Butylamin an Methyhnethacrylat oder das Additionsprodukt von tert-Butylamin an tert-Butylacrylat auffassen lassen.

Die Herstellung der Blockierungsmittel kann in einem geeigneten, vorzugsweise polaren Lösemittel geschehen. Gegebenenfalls lassen sich die gewünschten Produkte destillativ oder durch Extraktion von dem Lösemittel und/oder Nebenprodukten trennen und anschließend mit den Polyisocyanaten umsetzen. Es ist aber auch möglich, die Reaktion in einem geeigneten Lacklösemittel durchzuführen und die erhaltene Reaktionsmischung direkt zur Herstellung der blockierten Polyisocyanate zu verwenden.

Selbstverständlich können auch Blockierungsmittel der Formel (III) verwendet werden, die auf einem anderen als dem oben beschriebenen Weg, beispielsweise durch Umesterung eines Ethylesters der Formel (III) in einen Methylester, hergestellt wurden.

Selbstverständlich können Blockierungsmittel der Formel (III) in beliebigen Gemischen untereinander verwendet werden.

Als Polyisocyanate (II), die zur Herstellung der erfindungsgemäßen blockierten Polyisocyanate eingesetzt werden, können Trüsocyanatononan und alle bekannten auf aliphatischen, cycloaliphatischen und aromatischen Diisocyanaten sowie die ihnen basierenden Polyisocyanate mit einem Isocyanatgehalt von 0,5 bis 60, bevorzugt 3 bis 30, besonders bevorzugt 5 bis 25 Gew.-% oder deren Gemische eingesetzt werden. Beispielsweise sind dies Polyisocyanate auf Basis von 1,4-Diisocyanatobutan, 1,6-Diisocyanatohexan (HDI), 2-Methyl-1,5-diisocyanatopentan, 1,5-Diiso-cyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,6- und 2,4-Diisocyanato-1-methylcyclohexan 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4- und 4,4'-Diisocyanatodicyclohexylmethan, 1-Iso-cyanato-1-methyl-4(3)isocyanato-methylcyclohexan (IMCI), Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), Diphenylmethan-2,4'-und/oder 4,4'-diisocyanat (MDI), 1,5-Diisocyanatonaphthalin oder die entsprechenden Diisocyanate.

Bevorzugt geeignet sind Polyisocyanate, die Oxadiazintriongruppen, Carbodiimidgruppen, Allophanatgruppen, Isocyanuratgruppen, Iminooxadiazintriongruppen, Urethangruppen und Biuretgruppen aufweisen. Besonders gut sind erfindungsgemäß die bekannten Polyisocyanate, die hauptsächlich bei der Herstellung von Lacken verwendet werden einsetzbar, z.B. Oxadiazintrion-, Allophanat-, und/oder Biuret-, und/oder Isocyanurat-, Uretdiongruppen und/oder Iminooxadiazintriongruppen, aufweisende Modifizierungsprodukte der oben genannten einfachen Diisocyanate, insbesondere des Hexamethylendiisocyanats oder des Isophorondiisocyanats oder des 2,4'- oder des 4,4'-Diisocyanatodicyclohexylmethans. Weiterhin geeignet sind niedermolekulare, Urethangruppen enthaltende Polyisocyanate, wie sie durch Umsetzung von im Überschuss eingesetztem IPDI oder TDI mit einfachen mehrwertigen Alkoholen des Molekulargewichtsbereiches 62 bis 300, insbesondere mit Trimethylolpropan oder Glycerin, erhalten werden können.

Besonders bevorzugt sind Polyisocyanate mit Isocyanurat-, Iminooxadiazindion- oder Biuretstruktur auf Basis von Hexamethylendiisocyanat (HDI), Isophorondiisocyanat (IPDI) und/oder 2,4'-und/oder 4,4'-Diisocyanatodicyclohexylmethan oder Gemische dieser Verbindungen.

Die oben beschriebenen, durch Modifizierung von monomeren Diisocyanaten hergestellten Polyisocyanate können nach der Herstellung von überschüssigen Monomeren befreit werden, beispielsweise durch Dünnschichtdestillation. Es ist aber auch möglich, die nach der Modifizierung anfallenden, monomere Diisocyanate enthaltenden Reaktionsgemische sofort zur Blockierung einzusetzen.

Geeignete Polyisocyanate sind ferner die bekannten, endständige Isocyanatgruppen aufweisenden Prepolymere, wie sie insbesondere durch Umsetzung der oben genannten einfachen Polyisocyanate, vorzugsweise Diisocyanate, mit unterschüssigen Mengen an organischen Verbindungen mit mindestens zwei gegenüber Isocyanaten reaktionsfähigen funktionellen Gruppen zugänglich sind. In diesen bekannten Prepolymeren entspricht das Verhältnis von

Isocyanatgruppen zu gegenüber NCO-reaktiven Wasserstoffatomen 1,3:1 bis 20:1, vorzugsweise 1,5:1 bis 3:1, wobei die Wasserstoffatome vorzugsweise aus Hydroxylgruppen stammen. Die Art und Mengenverhältnisse der bei der Herstellung von NCO-Prepolymeren eingesetzten Ausgangsmaterialien werden vorzugsweise so gewählt, dass die NCO-Prepolymeren vorzugsweise eine mittlere NCO-Funktionalität von 2 bis 3 und ein Zahlenmittel der Molmasse von 500 bis 10000, vorzugsweise 800 bis 4000 aufweisen. Es ist möglich nach Herstellung der Prepolymere nicht umgesetztes Polyisocyanat, vorzugsweise destillativ, zu entfernen.

Selbstverständlich können die genannten Polyisocyanate auch als Gemische untereinander eingesetzt werden.

Die Herstellung der erfindungsgemäßen blockierten Polyisocyanate (I) kann nach an sich bekannten Methoden erfolgen. Beispielsweise können ein oder mehrere Polyisocyanate vorgelegt und das Blockierungsmittel (beispielsweise während etwa 10 Min.) unter Rühren zudosiert werden. Es wird so lange gerührt, bis kein freies Isocyanat mehr nachweisbar ist. Es ist auch möglich, ein oder mehrere Polyisocyanate mit einem Gemisch aus zwei oder mehreren Blockierungsmitteln zu blockieren.

Es ist aber auch möglich die freien NCO-Gruppen der Polyisocyanate nur teilweise mit den erfindungsgemäßen Blockierungsmitteln umzusetzen und den restliche Teil mit einem Überschuss an Hydroxylgruppen enthaltenden später detailliert beschriebenen Polyestern, Polyurethanen und/oder Polyacrylaten sowie gegebenenfalls deren Gemischen umzusetzen, so dass ein freie Hydroxygruppen und blockierte NCO-Gruppen enthaltendes Polymer entsteht, das beim Erhitzen auf geeignete Einbrenntemperaturen ohne Zugabe weiterer Isocyanatgruppen und/oder Hydroxylgruppen enthaltender Stoffe vernetzt.

Es ist weiterhin möglich, freie NCO-Gruppen von Diisocyanaten nur teilweise mit den erfindungsgemäßen Blockierungsmitteln umzusetzen und anschließend einen Teil der nichtblockierten NCO-Gruppen unter Bildung von aus mindestens zwei Diisocyanaten aufgebauten Polyisocyanaten abzureagieren.

Die Herstellung der blockierten Polyisocyanate und selbstvernetzenden Einkomponenten-Einbrennsysteme kann gegebenenfalls in einem geeigneten organischen Lösemittel erfolgen. Als Lösemittel geeignet sind beispielsweise die an sich üblichen Lacklösemittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, N-Methylpyrrolidon, Chlorbenzol oder Testbenzin. Mischungen, die vor allem höher substituierte Aromaten enthalten, wie sie beispielsweise unter den Bezeichnungen Solvent Naphtha, Solvesso® (Exxon Chemicals, Houston, USA), Cypar® (Shell Chemicals, Eschborn, DE), Cyclo Sol® (Shell Chemicals, Eschborn, DE), Tolu Sol® (Shell Chemicals, Eschborn, DE), Shellsol® (Shell Chemicals, Eschborn, DE) im Handel sind, sind ebenfalls geeignet. Die Zugabe der Lösemittel kann aber auch im Anschluss an die Herstellung der erfmdungsgemäßen blockierten Polyisocyanate erfolgen, beispielsweise zur Erniedrigung der Viskosität. In diesem Fall können auch Alkohole, wie beispielsweise Isobutanol verwendet werden, da dann die vorhandenen NCO-Gruppen vollständig mit den isocyanatreaktiven Gruppen abreagiert sind. Bevorzugte Lösemittel sind Aceton, Butylacetat, 2-Butanon, 1-Methoxypropyl-2-acetat, Xylol, Toluol, Mischungen, die vor allem höher substituierte Aromaten enthalten, wie sie beispielsweise unter den Bezeichnungen Solvent Naphtha, Solvesso® (Exxon Chemicals, Houston, USA), Cypar® (Shell Chemicals, Eschborn, DE), Cyclo Sol® (Shell Chemicals, Eschborn, DE), Tolu Sol® (Shell Chemicals, Eschborn, DE), Shellsol® (Shell Chemicals, Eschborn, DE) im Handel sind.

Bei der Herstellung der erfindungsgemäßen Polyisocyanate können auch Katalysatoren, Colöser und andere Hilfsmittel und Additive verwendet werden.

Die erfindungsgemäßen blockierten Polyisocyanate werden zur Herstellung von Bindemitteln für Lacke, Farben und andere Einbrennsysteme wie Klebstoffe und Elastomere verwendet und dienen hierbei als Vernetzer für Polyolkomponenten.

Die erfindungsgemäßen blockierten Polyisocyanate sind, wie oben beschrieben, selbstvernetzende Polymere und/oder können auch als Vernetzer für Polyolkomponenten verwendet werden. Als Polyolkomponenten, die auch als Gemische eingesetzt werden können, kommen Polyhydroxypolyester, Polyhydroxypolyether oder andere Hydroxylgruppen aufweisende Polymerisate, z.B. die an sich bekannten Polyhydroxypolyacrylate mit einer Hydroxylzahl von 20 bis 200, vorzugsweise von 50 bis 130, bezogen auf 100 %ige Produkte, oder Polyhydroxycarbonate oder Polyhydroxyurethane in Betracht.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der beispielhaft genannten Art mit überschüssigen Mengen Polycarbonsäuren bzw. Polycarbonsäureanhydriden, insbesondere Dicarbonsäuren bzw. Dicarbonsäureanhydriden. Geeignete Polycarbonsäuren bzw. Polycarbonsäureanhydride sind beispielsweise Adipinsäure, Phthalsäure, Isophthalsäure, Phthalsäureanhydrid, Tetrahydrophthalsäureanhydrid, Hexahydrophthalsäureanhydrid, Maleinsäure, Maleinsäureanhydrid, deren Diels-Alder-Addukte mit Cyclopentadien, Fumarsäure oder dimere bzw. trimere Fettsäuren. Bei der Herstellung der Polyesterpolyole können selbstverständlich beliebige Gemische der beispielhaft genannten mehrwertigen Alkohole oder beliebige Gemische der beispielhaft genannten Säuren bzw. Säureanhydride eingesetzt werden.

Die Herstellung der Polyesterpolyole erfolgt nach bekannten Methoden, wie z.B. in Houben-Weyl, Methoden der organischen Chemie, Band XIV/2, G. Thieme-Verlag, 1963, Seiten 1 bis 47 beschrieben sind. Die gegebenenfalls

erforderliche hydrophile Modifizierung dieser Polyhydroxylverbindungen erfolgt nach an sich bekannten Methoden, wie sie beispielsweise in EP-A 0 157 291 oder EP-A 0 427 028 beschrieben sind.

Geeignete Polyetherpolyole sind die aus der Polyurethanchemie an sich bekannten Ethoxylierungs-und/oder Propoxylierungsprodukte geeigneter 2- bis 4-wertiger Startermoleküle wie z.B. Wasser, Ethylenglykol, Propandiol, Trimethylolpropan, Glycerin und/oder Pentaerythrit.

Bei den Polyhydroxylpolyacrylaten handelt es sich um an sich bekannte Mischpolymerisate von Styrol mit einfachen Estern der Acrylsäure und/oder Methacrylsäure, wobei zwecks Einführung der Hydroxylgruppen Hydroxyalkylester, wie beispielsweise die 2-Hydroxyethyl-, 2-Hydroxypropyl-, 2-,3- oder 4-Hydroxybutylester dieser Säuren mitverwendet werden.

Es können auch wasserhaltige 1K-Polyurethanlacke hergestellt werden, indem die gegebenenfalls lösemittelhaltigen erfindungsgemäßen blockierten Polyisocyanate zusammen mit einem hydrophil modifizierten hydroxylgruppenhaltigen Polymer in Wasser dispergiert werden.

Die Herstellung der Lacke, Farben und anderer Formulierungen unter Verwendung der erfindungsgemäßen Polyisocyanate erfolgt nach an sich bekannten Methoden. Außer den Polyisocyanaten und Polyolen können den Formulierungen übliche Additive und andere Hilfsstoffe (z.B. Lösemittel, Pigmente, Füllstoffe, Verlaufsmittel, Entschäumer, Katalysatoren) in durch den Fachmann durch orientierende Versuche leicht zu ermittelnden Mengen zugesetzt werden.

Es können ebenfalls weitere Verbindungen als zusätzliche Vernetzerkomponente eingesetzt werden, die mit Verbindungen reagieren können, die NCO-reaktive Gruppen aufweisen. Beispielsweise sind dies Aminoplastharze. Als Aminoplastharze sind die in der Lacktechnologie bekannten Kondensationsprodukte von Melamin und Formaldehyd, bzw. Harnstoff und Formaldehyd anzusehen. Geeignet sind alle herkömmlichen, nicht oder mit gesättigten Monoalkoholen mit 1 bis 4 C-Atomen veretherten Melamin-Formaldehyd-Kondensate. Im Falle der Mitverwendung anderer Vernetzerkomponenten muss die Menge an Bindemittel mit NCO-reaktiven Hydroxylgruppen entsprechend angepasst werden.

Die erfindungsgemäßen blockierten Polyisocyanate können zur Herstellung von Einbrennlacken, z.B. für die Industrielackierung und bei der Automobilerstlackierung verwendet werden. Hierzu können die erfindungsgemäßen Überzugsmittel durch Rakeln, Tauchen, Spritzauftrag wie Druckluft- oder Airless-Spritzen, sowie durch elektrostatischen Auftrag, beispielsweise Hochrotationsglockenauftrag, aufgetragen werden. Die Trockenfilm-Schichtdicke kann dabei beispielsweise bei 10 bis 120 µm liegen. Das Aushärten der getrockneten Filme erfolgt durch Einbrennen in Temperaturbereichen von 90 bis 160°C, bevorzugt 110 bis 140°C. Die erfindungsgemäßen blockierten Polyisocyanate können zur Herstellung von Einbrennlacken für die kontinuierliche Bandbeschichtung eingesetzt werden, wobei maximale Einbrenntemperaturen, dem Fachmann als "Peak Temperaturen", falls es sich beim Substrat um Metall handelt als "Peak Metal Temperatur" bekannt, zwischen 130 und 300°C, bevorzugt 190 bis 260°C liegen und Trockenfilm-Schichtdicken von beispielsweise 3 bis 40 µm erreicht werden können.

Wie die nachfolgenden, die Erfindung nicht begrenzenden Beispiele belegen, wird die der Erfindung zu Grunde liegende Aufgabe durch die erfindungsgemäßen Polyisocyanate und selbstvernetzenden Einbrennsysteme gelöst. Die erfindungsgemäßen Polyisocyanate weisen in Verbindung mit Polyolen niedrigere Vernetzungs- bzw. Einbrenntemperaturen auf als butanonoximblockierte Polyisocyanate, sind in organischen Lösungen kristallisationsstabil und lassen sich auf einfache Weise herstellen. Zudem sind organische Lösungen der erfindungsgemäßen blockierten Polyisocyanate deutlich weniger viskos als die herkömmlicher blockierter Polyisocyanate, was im Hinblick auf eine Verringerung des Lösemittelanteils in modernen Lacksystemen erwünscht ist.

## Beispiele

Bei Prozentangaben handelt es sich um Gewichtsprozent, solange nichts anderes angegeben wird. Bei. Festkörpergehalt und BNCO-Gehalt handelt es sich um berechnete Größen, die folgendermaßen berechnet werden:

Festkörpergehalt in % = [(Gesamtgewicht-Gesamtgewicht der Lösemittel) dividiert durch Gesamtgewicht] multipliziert mit 100

BNCO-Gehalt in % = [(val blockierter NCO-Gruppen multipliziert mit 42) dividiert durch Gesamtgewicht] multipliziert mit 100

Partikelgrößen wurden mit Laser-Korrelationsspektroskopie ermittelt.

**Herkunft der Ausgangsstoffe:**

Polyisocyanat A1

Desmodur® N3300, Bayer AG, isocyanuratgruppenhaltiges Lackpolyisocyanat auf der Basis von 1,6-Diisocyanatohexan (HDI) mit einem NCO-Gehalt von 21,8 Gew.-%, einer Viskosität bei 23°C von ca. 3000 mPas und einer NCO-Funktionalität von ca. 3,5.

Polyisocyanat A2

Desmodur® Z4470BA, Bayer AG, isocyanuratgruppenhaltiges Lackpolyisocyanat auf der Basis von Isophorondiisocyanat (IPDI) enthaltend 30 Gew.-% Butylacetat mit einem NCO-Gehalt von 11,8 Gew.-%, einer Viskosität bei 23°C von ca. 700 mPas und einer NCO-Funktionalität von ca. 3,4.

Polyisocyanat A3

Desmodur® Z4470MPA/X, Bayer AG, isocyanuratgruppenhaltiges Lackpolyisocyanat auf der Basis von Isophorondiisocyanat (IPDI) enthaltend 30 Gew.-% eines 1:1 Gemisches aus Xylol und Methoxypropylacetat mit einem NCO-Gehalt von 11,8 Gew.-%, einer Viskosität bei 23°C von ca. 700 mPas und einer NCO-Funktionalität von ca. 3,4.

Blockierungsmittel B1

Zu 73,14 g tert-Butylamin gelöst in 160,0 g Methanol wurden unter Rühren bei Raumtemperatur 86,09 g Methylacrylat zugegeben und die entstandene klare Lösung für weitere 16 h bei Raumtemperatur gerührt. Man destillierte das Lösungsmittel ab und erhielt 158,1 g eines Produktes der Formel

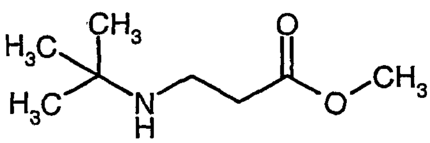

in einer für die weitere Umsetzung zum blockierten Polyisocyanat ausreichenden Reinheit.

Blockierungsmittel B2

Zu 95,09 g tert-Butylamin gelöst in 175,0 g Ethanol wurden unter Rühren bei Raumtemperatur 100,1 g Methylmethacrylat zugegeben und die entstandene klare Lösung für weitere 72 h bei 70°C gerührt. Man destilliert die leichtflüchtigen Bestandteile ab, filtrierte und erhielt als Filtrat 165,7 g eines Produktes der Formel

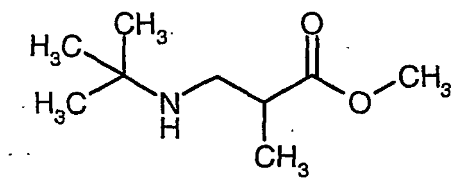

in einer für die weitere Umsetzung zum blockierten Polyisocyanat ausreichenden Reinheit.

Blockierungsmittel B3

Zu 73,14 g tert-Butylamin gelöst in 200,0 g Methanol wurden unter Rühren bei Raumtemperatur 128,1 g tert-Butylacrylat zugegeben und die entstandene klare Lösung für weitere 16 h bei Raumtemperatur gerührt. Man destillierte das Lösungsmittel ab und erhielt 199,1 g eines Produktes der Formel

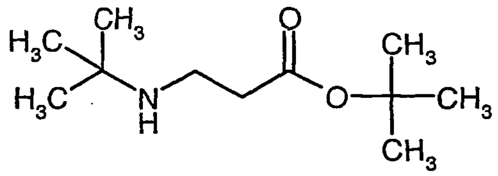

in einer für die weitere Umsetzung zum blockierten Polyisocyanat ausreichenden Reinheit.

Blockierungsmittel B4

Zu 99,18 g Cyclohexylamin gelöst in 185,0 g Methanol wurden unter Rühren bei Raumtemperatur 86,09 g Methylacrylat zugegeben und die entstandene klare Lösung für weitere 16 h bei Raumtemperatur gerührt. Man destilliert das Lösungsmittel ab und erhielt 184,2 g eines Produktes der Formel

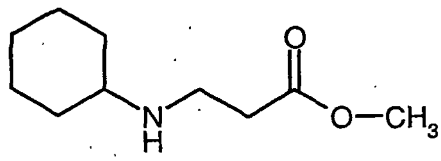

in einer für die weitere Umsetzung zum blockierten Polyisocyanat ausreichenden Reinheit.

Blockierungsmittel B5

Zu 59,0 g Isopropylamin gelöst in 135,0 g Methanol wurden unter Rühren bei Raumtemperatur 100,1 g Methylmethacrylat zugegeben und die entstandene klare Lösung für weitere 12 h bei Raumtemperatur gerührt. Man destillierte das Lösungsmittel ab und erhielt 158,2 g eines Produktes der Formel.

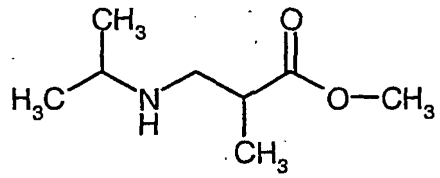

in einer für die weitere Umsetzung zum blockierten Polyisocyanat ausreichenden Reinheit.

Blockierungsmittel B6

Zu 73,14 g tert-Butylamin gelöst in 175,0 g Ethanol wurden unter Rühren bei Raumtemperatur 100,1 g Crotonsäuremethylester zugegeben und die entstandene klare Lösung für weitere 72 h bei 70°C gerührt. Man destillierte das Lösungsmittel ab und erhielt 168,9 g eines Produktes der Formel

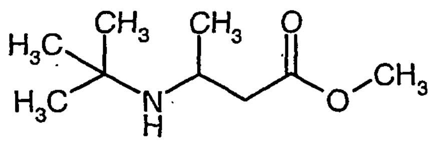

in einer für die weitere Umsetzung zum blockierten Polyisocyanat ausreichenden Reinheit.

**Beispiel 1**

(Herstellung eines erfindungsgemäßen lösungsmittelhaltigen Polyisocyanat-Vernetzers)

Zu 192,7 g (1 Val) Polyisocyanat A1 in 88,0 g Butylacetat gelöst wurden 159,3 g (1 val) Blockierungsmittel B 1 innerhalb von 10 min zugetropft. Die Temperatur stieg hierbei auf ca. 40°C an. Nach 4 h Rühren bei dieser Temperatur waren IR-spektroskopisch keine freien NCO-Gruppen mehr nachweisbar. Man erhielt 440,0 g eines klaren Produktes mit folgenden Kenndaten:

| | |
|---|---|
| Festkörpergehalt: | 80 % |
| BNCO-Gehalt: | 9,54 % |
| Viskosität bei 23°C | 3500 m Pas |

**Vergleichsbeispiel 1**

(Herstellung eines 3,5-Dimethylpyrazol-blockierten blockierten Polyisocyanates)

Zu 192,7 g (1 Val) Polyisocyanat A1 in 72,2 g Butylacetat gelöst wurden 96,0 g (1 val) 3,5-Dimethylpyrazol zugegeben. Die Temperatur stieg hierbei auf ca. 60°C an. Nach 2 h Rühren bei dieser Temperatur waren IR-spektroskopisch keine freien NCO-Gruppen mehr nachweisbar. Man erhielt 360,9 g eines klaren Produktes mit folgenden Kenndaten:

| | |
|---|---|
| Festkörpergehalt: | 80 % |
| BNCO-Gehalt: | 11,6% |
| Viskosität bei 23°C | 10000 m Pas |

**Beispiel 2**

(Herstellung eines erfindungsgemäßen lösungsmittelhaltigen Polyisocyanat-Vernetzers)

Zu 356 g (1 val) Polyisocyanat A2 in 69,0 g Butylacetat gelöst wurden 159,3 g (1 val) Blockierungsmittel B 1 innerhalb von 10 min zugetropft. Man erhöhte die Temperatur auf ca. 60°C. Nach 6 h Rühren bei dieser Temperatur waren IR-spektroskopisch keine freien NCO-Gruppen mehr nachweisbar. Man erhielt 584,3 g eines klaren Produktes mit folgenden Kenndaten:

| | |
|---|---|
| Festkörpergehalt: | 70 % |
| BNCO-Gehalt: | 7,19 % |
| Viskosität bei 23°C | 10000 m Pas |

**Vergleichsbeispiel 2**

(Herstellung eines 3,5-Dimethylpyrazol-blockierten blockierten Polyisocyanates)

Zu 356 g (1 val) Polyisocyanat A2 in 41,0 g Butylacetat gelöst wurden 96,0 g (1 val) kristallines 3,5-Dimethylpyrazol zugegeben. Man erhöhte die Temperatur auf ca. 60°C. Nach 2 h Rühren bei dieser Temperatur waren IR-spektroskopisch keine freien NCO-Gruppen mehr nachweisbar. Man erhielt 493 g eines klaren Produktes mit folgenden Kenndaten:

| | |
|---|---|
| Festkörpergehalt: | 70% |
| BNCO-Gehalt: | 8,52 % |
| Viskosität bei 23°C | 70.000 m Pas |

**Beispiel 3**

(Herstellung eines erfindungsgemäßen selbstvernetzende Einkomponenten-Einbrennsystems)

Zu 391,6 g (1,1 val) Polyisocyanat A2 in 85 g Butylacetat gelöst wurden 127,4 g (0,8 val) Blockierungsmittel B 1 innerhalb von 10 min zugetropft. Die Temperatur stieg hierbei auf ca. 40°C an. Nach 4 h Rühren bei dieser Temperatur wurden 935 g (1,1 val) Desmophen® T XP 2013, Bayer AG, ölfreier, hydroxylgruppenhaltiger Polyester, 75 %ig in Solventnaphtha 100 mit einem OH-Gehalt nach DIN 53 240/2 von 2,0 % zugegeben und weitere 4 h bei 70°C nachgerührt, worauf IR-spektroskopisch keine freien NCO-Gruppen mehr nachweisbar waren. Man erhielt nach Verdünnen mit 300g Butylacetat 1839,0 g eines klaren Produktes mit folgenden Kenndaten:

| | |
|---|---|
| Festkörpergehalt: | 60% |
| Blockierte NCO-Gruppen: | 0,8 val |
| Freie Hydroxylgruppen | 0,8 val |
| Viskosität bei 23°C | 750 m Pas |

**Vergleichsbeispiel 3**

(Herstellung eines selbstvernetzende Einkomponenten-Einbrennsystems mit Butanonoxim-Blockierung)

Zu 391,6 g (1,1 val) Polyisocyanat A2 wurden 69,6 g (0,8 val) Butanoxim innerhalb von 10 min zugetropft. Die Temperatur stieg hierbei auf ca. 40°C an. Nach 4 h Rühren bei dieser Temperatur wurden 935 g (1,1 val) Desmophen® T XP 2013, Bayer AG, ölfreier, hydroxylgruppenhaltiger Polyester, 75 %ig in Solventnaphtha 100 mit einem OH-Gehalt nach DIN 53 240/2 von 2,0 % zugegeben und weitere 4 h bei 70°C nachgerührt, worauf IR-spektroskopisch keine freien NCO-Gruppen mehr nachweisbar waren. Man erhielt nach Verdünnen mit 345g Butylacetat 1741,2 g eines klaren Produktes mit folgenden Kenndaten:

| | |
|---|---|
| Festkörpergehalt: | 60% |
| Blockierte NCO-Gruppen: | 0,8 val |
| Freie Hydroxylgruppen | 0,8 val |
| Viskosität bei 23°C | 900 m Pas |

Man erkennt, dass die mit dem Blockierungsmittel B 1 blockierten Polyisocyanate der Beispiele 1-3 eine niedrigere Viskosität aufweisen als die entsprechenden mit 3,5-Dimethylpyrazol bzw. Butanonoxim blockierten Polyisocyanate der Vergleichsbeispiele 1-3.

**Beispiel 4**

(Herstellung eines lösungsmittelhaltigen Polyisocyanat-Vernetzers)

Zu 192,7 g (1 Val) Polyisocyanat A1 in 157,0 g Butylacetat gelöst wurden 173,3 g (1 val) Blockierungsmittel B2 innerhalb von 10 min zugetropft. Die Temperatur stieg hierbei auf ca. 40°C an. Nach 4 h Rühren bei dieser Temperatur waren 1R-spektroskopisch keine freien NCO-Gruppen mehr nachweisbar. Man erhielt 523,0 g eines klaren Produktes mit folgenden Kenndaten:

| | |
|---|---|
| Festkörpergehalt: | 70 % |
| BNCO-Gehalt: | 8,03% |
| Viskosität bei 23°C | 2000 m Pas |

**Beispiel 5**

(Herstellung eines lösungsmittelhaltigen Polyisocyanat-Vernetzers)

Zu 192,7 g (1 Val) Polyisocyanat A1 in 131,0 g Butylacetat gelöst wurden 201,3 g (1 val) Blockierungsmittel B3 innerhalb von 10 min zugetropft. Die Temperatur stieg hierbei auf ca. 40°C an Nach 4 h Rühren bei dieser Temperatur

waren IR-spektroskopisch keine freien NCO-Gruppen mehr nachweisbar. Man erhielt 525,0 g eines klaren Produktes mit folgenden Kenndaten:

| | |
|---|---|
| Festkörpergehalt: | 75 % |
| BNCO-Gehalt: | 8,00 % |
| Viskosität bei 23°C | 2500 m Pas |

**Beispiel 6**

(Herstellung eines lösungsmittelhaltigen Polyisocyanat-Vernetzers)

Zu 192,7 g (1 Val) Polyisocyanat A1 in 126,0 g Butylacetat gelöst wurden 185,3 g (1 val) Blockierungsmittel B4 innerhalb von 10 min zugetropft. Die Temperatur stieg hierbei auf ca. 40°C an. Nach 4 h Rühren bei dieser Temperatur waren 1R-spektroskopisch keine freien NCO-Gruppen mehr nachweisbar. Man erhielt 504,0 g eines klaren Produktes mit folgenden Kenndaten:

| | |
|---|---|
| Festkörpergehalt: | 75 % |
| BNCO-Gehalt: | 8,33 % |
| Viskosität bei 23°C | 3000 m Pas |

**Beispiel 7**

(Herstellung eines lösungsmittelhaltigen Polyisocyanat-Vernetzers) .

Zu 192,7 g (1 Val) Polyisocyanat A1 in 145,0 g Butylacetat gelöst wurden 145,3 g (1 val) Blockierungsmittel B5 innerhalb von 10 min zugetropft. Die Temperatur stieg hierbei auf ca. 40°C an. Nach 4 h Rühren bei dieser Temperatur waren IR-spektroskopisch keine freien NCO-Gruppen mehr nachweisbar. Man erhält 482,9 g eines klaren Produktes mit folgenden Kenndaten:

| | |
|---|---|
| Festkörpergehalt: | 70 % |
| BNCO-Gehalt: | 8,71 % |
| Viskosität bei 23°C | 2500 m Pas |

**Beispiel 8**

(Herstellung eines lösungsmittelhaltigen Polyisocyanat-Vernetzers)

Zu 192,7 g (1 Val) Polyisocyanat A1 in 157,0 g Butylacetat gelöst wurden 173,3 g (1 val) Blockierungsmittel B6 innerhalb von 10 min zugetropft. Die Temperatur stieg hierbei auf ca. 40°C an. Nach 4 h Rühren bei dieser Temperatur waren IR-spektroskopisch keine freien NCO-Gruppen mehr nachweisbar. Man erhielt 523,0 g eines klaren Produktes mit folgenden Kenndaten:

| | |
|---|---|
| Festkörpergehalt: | 70 % |
| BNCO-Gehalt: | 8,03% |
| Viskosität bei 23°C | 2000 m Pas |

**Vergleichsbeispiel 4**

(Lösemittelhaltige mit Diisopropylamin, bzw. 1,2,4-Triazol bzw. Malonsäurediethylester blockierte Polyisocyanate)

192,7 g des Polyisocyanates A1 wurden mit 136 g Butylacetat verdünnt und unter Rühren und trockenem Stickstoff mit 101,0 g Diisopropylamin (1 val) versetzt, wobei eine leichte Exothermie beobachtet wurde. Es wurde nach vollständiger Zugabe auf 70°C erwärmt und nach 30 min Rühren bei dieser Temperatur wurde der Ansatz auf Raumtemperatur abgekühlt. Anschließend waren im IR-Spektrum keine freien Isocyanat-Gruppen mehr nachweisbar. Es wurde ein klares, fast farbloses Produkt mit folgenden Kenndaten erhalten:

| | |
|---|---|
| Festkörpergehalt: | 65 % |
| BNCO-Gehalt: | 9,30 % |
| Viskosität bei 23°C | 1900 m Pas |

Nach 14 Tagen Lagerung bei Raumtemperatur setzte eine Verfestigung durch Kristallisation ein. Nach 18 Tagen Lagerung bei Raumtemperatur war eine feste, weiße undurchsichtige Masse entstanden. Die Produkte aus den Beispielen 1-8 zeigten auch nach 12 Wochen kein Zeichen einer Kristallisation oder Verfestigung. Ein analog hergestelltes, mit 1,2,4-Triazol blockiertes und auf Polyisocyanat A1 basierendes blockiertes Polyisocyanat kristallisiert schon bei der Herstellung. Ein analog hergestelltes, mit Malonsäurediethylester blockiertes und auf Polyisocyanate A1 basierendes blockiertes Polyisocyanat kristallisiert nach ca. 21 Tagen.

**Beispiel und Vergleichsbeispiel 9**

(Herstellung einer Beschichtung aus dem selbstvernetzenden Einkomponenten-Einbrennsystem des Beispiels 3 und des Vergleichsbeispiels 1)

Zu jeweils 142,9 g der Produkte aus Beispiel 3 und Vergleichsbeispiel 1 wurden jeweils 1,4 g Dibutylzinndilaurat (DBTL), 0,15 g Modaflow® (Verlaufshilfsmittel, Acrylcopolymer der Firma Solutia, 10 % in Methoxypropylacetat) und 0,15 g Baysilon® OL 17 (Verlaufshilfsmittel, Polyetherpolysiloxan, 10 % in Methoxypropylacetat, Bayer AG, Leverkusen,) gegeben und die Mischung jeweils innig verrührt. Mit einem Rakel wurde die beiden Mischungen auf jeweils drei Glasplatten appliziert und diese für 10 min abgelüftet. Nach 30 min Einbrennen im Umluftofen bei 100°C, 140°C bzw. 160°C wurden Beschichtungen mit einer Trockenfilmschichtdicke von 40 µm erhalten. Zur Prüfung der Vernetzung wurde die Lösungsmittelbeständigkeit der erhaltenen Filme bestimmt.

Tabelle 1 Lösemittelbeständigkeiten

| | | 100°C | 140°C | 160°C |
|---|---|---|---|---|
| **System aus Beispiel 3** Einbrenntemperatur | | | | |
| (X/MPA/EA/Ac) | [Note]1),2) | | | |
| | 1 min. | 3 4 4 5 | 1 1 2 3 | 1 1 2 3 |
| | 5 min. | 4 4 5 5 | 2 3 4 4 | 2 3 4 4 |
| **System aus Vergleichsbeispiel 1** Einbrenntemperatur | | 100°C | 140°C | 160°C |
| (X/MPA/EA/Ac) | [Note]1),2) | | | |
| | 1 min. | 5 5 5 5 | 2 3 3 4 | 1 1 2 3 |
| | 5 min. | 5 5 5 5 | 3 4 5 5 | 2 3 4 4 |

1) 0 - gut; 5 - schlecht,
2) X=Xylol, MPA=Methoxypropylacetat, EA=Ethylacetat, Ac=Aceton

Wie aus Tabelle 1 hervorgeht, wurde bei dem dem selbstvernetzenden Einkomponenten-Einbrenn-system des Beispiels 3 durch 30 min Einbrennen bei 140°C gleiche Lösungsmittelbeständigkeiten erreicht wie bei einem Einbrennen bei 160°C, während bei dem selbstvernetzenden Einkomponenten-Einbrennsystem des Vergleichsbeispiels 1 die endgültigen Beschichtungseigenschaften erst nach Einbrennen unter höheren Temperaturen erreicht werden.

**Beispiel und Vergleichsbeispiel 10** (Herstellung eines 1K-PUR-Klarlackes ausgehend von dem erfindungsgemäßen blockierten Polyisocyanat des Beispiels 1 und eines 1K-PUR-Klarlackes ausgehend von einem mit 3,5-Dimethylpyrazol blockierten Polyisocyanat)

Zu 44,0 g der Produktes aus Beispiel 1 und 57,5 g Desmophen® A 870 (OH-funktionelles Polyacrylatpolymer, Bayer AG, Leverkusen, 70 % in Butylacetat, mit einem OH-Gehalt nach DIN 53 240/2 von 3,0 %) wurden 0,75 g Dibutylzinndilaurat (DBTL), 0,08 g Modaflow® (Verlaufshilfsmittel, Acrylcopolymer der Firma Solutia, 10 % in Methoxypropylacetat) und 0,08 g Baysilon OL 17 (Verlaufshilfsmittel, Polyetherpolysiloxan der Firma Bayer AG, Leverkusen, 1 % in Methoxypropylacetat) gegeben und die Mischung innig verrührt. Mit einem Rakel wurde die Mischung auf zwei mit einem wässrigen weißen Basislack vorbeschichteten Aluminiumbleche appliziert und diese für 10 min abgelüftet. Nach 30 min Einbrennen im Umluftofen bei 120°C bzw. 140°C wurden Beschichtungen mit einer Trockenfilmschichtdicke von

40 μm erhalten. Eine Übersicht über die ermittelten lacktechnischen Eigenschaften der Beschichtungen enthält Tabelle 2.

Zu 40,0 g Desmodur® BL VP LS 2253 (Bayer AG, Dimethylpyrazol blockiertes Polyisocyanat auf Basis von Desmodur® N 3300, Bayer AG, 75 % in MPA/Solvent Naphta) und 57,5 g Desmophen® A 870 (OH-funktionelles Polyacrylatpolymer, Bayer AG, Leverkusen, 70 % in Butylacetat, mit einem OH-Gehalt nach DIN 53 240/2 von 3,0 %) wurden 0,7 g Dibutylzinndilaurat (DBTL), 0,07 g Modaflow® (Verlaufshilfsmittel, Acrylcopolymer der Firma Solutia, 10 % in Methoxypropylacetat) und 0,07 g Baysilon® OL 17 (Verlaufshilfsmittel, Polyetherpolysiloxan, 1 % in Methoxypropylacetat, Bayer AG, Leverkusen) gegeben und die Mischung innig verrührt. Mit einem Rakel wurde die Mischung auf ein mit einem wässrigen weißen Basislack vorbeschichteten Aluminiumblech appliziert und diese für 10 min abgelüftet. Nach 30 min Einbrennen im Umluftofen bei 140°C wurden eine Beschichtung mit einer Trockenfilmschichtdicke von 40 μm erhalten. Eine Übersicht über die ermittelten lacktechnischen Eigenschaften der Beschichtung enthält Tabelle 2.

**Tabelle 2:** Vergleich von N-tert-Butyl-β-Alaninmethylester blockierten Polyisocyanaten mit 3,5-Dimethylpyrazol blockierten Polyisocyanaten:

| **Bezeichnung** | **Erfindungsgemäßes blockiertes aus Beispiel** | **Polyisocyanat 1** | **VP LS 2253** |
|---|---|---|---|
| **PIC-Basis** | N 3300 | | N 3300 |
| **Blockierungsmittel** | N-tert-Butyl-β-Alaninmethylester | | 3,5-Dimethylpyrazol |
| **Polyol** | **A 870** | | **A 870** |
| **Katalysator** | 1,0 % DBTL | | 1,0 % DBTL |
| **Visuelle Beurteilung des Lackes** | klar | | klar |
| **Einbrennbedingungen** | 30' 120°C | 30' 140°C | 30' 140°C |
| **Visuelle Beurteilung des Lackfilmes** | Klar | Klar | klar |
| **Pendeldämpfung** n. König [Schwingungen] [s] | 183 | 191 | 197 |
| **Lösemittelbeständigkeit**<br>(X/MPA/EA/Ac) [Note][1)]<br>1 min.<br>5 min. | <br><br>1 2 3 4<br>2 2 4 4 | <br><br>0 1 2 3<br>2 2 4 4 | <br><br>1 1 2 3<br>2 2 4 4 |
| **Chemikalienbeständigkeit[°C]**<br>(Grädientenofen)<br>Baumharz<br>Bremsflüssigkeit<br>Pankreatin, 50 %<br>NaOH, 1 %<br>$H_2SO_4$, 1 %<br>FAM, 10 min. [Note][1)] | <br><br>36<br>36<br>36<br>40<br>44<br>1 | <br><br>36<br>36<br>36<br>43<br>45<br>1 | <br><br>36<br>36<br>36<br>44<br>45<br>2 |
| **Kratzfestigkeit**<br>(Amtec Kistler-Laborwaschanlage)[2)]<br>Ausgangsglanz [20°]<br>Glanzverlust (ΔG1.) nach 10<br>Waschzyklen [20°]<br>Relativer Restglanz [%] | <br><br>91,5<br>29,5<br>67,8 | <br><br>91,3<br>28,1<br>69,2 | <br><br>91,1<br>32,8<br>64,0 |
| **Thermovergilbung Klarlack auf wässrigem-Basislack**<br>Ausgangsvergilbung [b]<br>Überbrennvergilbung bei 30' 140°C [Δb] | <br><br>1,5<br>1,5 | <br><br>1,8<br>2,1 | <br><br>0,8<br>1,0 |

(fortgesetzt)

| Bezeichnung | Erfindungsgemäßes blockiertes aus Beispiel | Polyisocyanat 1 | VP LS 2253 |
|---|---|---|---|
| Überbrennvergilbung bei 30' 160°C [Δb] | 0,0 | 0,3 | 0,2 |
| 1) 0 - gut; 5 - schlecht | | | |

Es wird deutlich, dass das auf dem erfindungsgemäßen Polyisocyanat basierende Lacksystem schon bei 120°C Einbrenntemperatur vergleichbare Eigenschaften besitzt wie das bei 140°C eingebrannte Lacksystem auf Basis des mit 3,5-Dimethylpyrazol-blockierten Polyisocyanats. Bei 140°C werden mit den erfindungsgemäßen Lacken Beschichtungen mit sehr guten Lösemittel- Kratz-, und Chemikalienbeständigkeiten und geringer Vergilbungsneigung erhalten.

<u>**Beispiel 11**</u>

(Herstellung eines wässrigen 1K-PUR-Klarlackes ausgehend von dem blockierten Polyisocyanat des Beispiels 1)

Zu 95,41 g (0,86 val) Isophorondiisocyanat wurde innerhalb von 5 min unter Rühren bei 50°C eine Lösung aus 28,77 g (0,43- val OH) Dimethylpropionsäure in 57,54 g N-Methylpyrrolidon zugetropft. Nach weiteren 150 min Rühren bei 80°C wurde ein NCO-Gehalt von 9,19 Gew.-% erreicht. Nach Zugabe von 28,08 g (0,08 val) Polyisocyanat A3 und 446,72 g (1,404 val OH) eines auf Adipinsäure, Isophthalsäure, Trimethylolpropan, Neopentyl- und Propylenglykol aufgebauten Polyesters wurde das Reaktionsgemisch weitere 180 min bei 80°C gerührt, wonach IR-spektroskopisch keine NCO-Gruppen mehr nachweisbar waren. Anschließend wurden bei 70°C 198,02 g des erfindungsgemäßen Polyisocyanates aus Beispiel 1 zugegeben und weitere 10 min nachgerührt. Anschließend wurden 19,12 g (0,215 mol) Dimethylethanolamin zugegeben und weitere 10 min nachgerührt. Dann wurde unter starkem Rühren 833,23 g 70°C warmes entionisiertes Wasser zugegeben, 90 min nachgerührt und unter Rühren abkühlen gelassen. Die erhaltene Dispersion besaß folgende Eigenschaften:

| | |
|---|---|
| Festkörpergehalt: | 45% |
| pH-Wert: | 8,08 |
| Viskosität bei 23°C: | 3400 m Pas |
| Partikelgröße: | 59 nm |

## Patentansprüche

1. Blockierte Polyisocyanate der Formel (I)

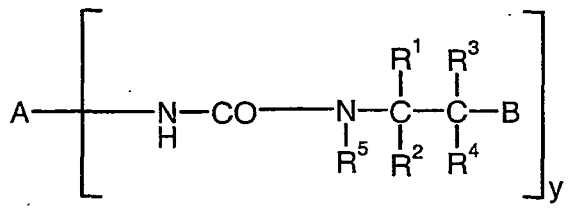

(I),

worin unabhängig voneinander

$R^1$-$R^4$ gleich oder verschieden sein können und Wasserstoff, $C_1$-$C_6$-Alkyl oder Cycloalkyl bedeuten,
$R^5$ $C_1$-$C_{10}$-Alkyl, $C_3$-$C_{10}$-Cycloalkyl bedeutet,
y eine Zahl von 2 bis 8 bedeutet,
A den Rest eines Isocyanats der Funktionalität y bedeutet,
B für

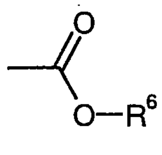 , 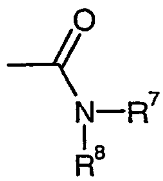 , 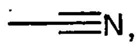 , 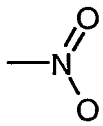 , 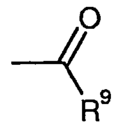

steht, wobei unabhängig voneinander
$R^6$-$R^8$ gleich oder verschieden sein können und $C_1$-$C_6$-Alkyl und/oder $C_3$-$C_6$-Cycloalkyl bedeuten und
$R^9$ Wasserstoff, $C_1$-$C_6$-Alkyl oder $C_3$-$C_6$-Cycloalkyl bedeutet.

2. Blockierte Polyisocyanate gemäß Anspruch 1, **dadurch gekennzeichnet, dass** $R^5$ für einen Amyl-, Isopropyl-, Isobutyl- oder tert-Butylrest steht.

3. Blockierte Polyisocyanate gemäß Anspruch 1, **dadurch gekennzeichnet, dass** $R^1$ für einen Methylrest steht und $R^2$, $R^3$, $R^4$ für ein Wasserstoffatom stehen.

4. Blockierte Polyisocyanate gemäß Anspruch 1, **dadurch gekennzeichnet, dass** $R^3$ für einen Methylrest steht und $R^1$, $R^2$, $R^4$ für ein Wasserstoffatom stehen.

5. Blockierte Polyisocyanate gemäß Anspruch 1, **dadurch gekennzeichnet, dass** $R^1$, $R^2$, $R^3$ und $R^4$ für ein Wasserstoffatom stehen.

6. Blockierte Polyisocyanate gemäß Anspruch 1, **dadurch gekennzeichnet, dass** in einem Molekül sowohl blockierte Polyisocyanatgruppen wie auch freie Hydroxylgruppen vorliegen.

7. Verfahren zur Herstellung der blockierten Polyisocyanate der Formel (I) gemäß Anspruch 1, **dadurch gekennzeichnet, dass** Polyisocyanate der allgemeinen Formel (II)

$$A\text{-}[N{=}C{=}O]_y \qquad (II),$$

worin A und y die für Formel (I) in Anspruch 1 angegebene Bedeutung haben,
mit sekundären Aminen der allgemeinen Formel (III)

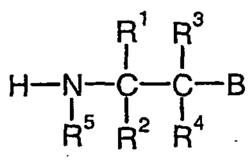 (III),

worin $R^1$- $R^5$ und B die für Formel (I) in Anspruch 1 genannte Bedeutung haben, umgesetzt werden.

8. Verfahren nach Anspruch 7, **dadurch gekennzeichnet, dass** die Blockierungsmittel (III) unmittelbar nach ihrer Herstellung in dem zu ihrer Herstellung verwendeten Lösemittel und ohne weitere Aufreinigung mit den Polyisocyanaten der allgemeinen Formel (II) umgesetzt werden.

9. Verwendung der blockierten Polyisocyanate gemäß Anspruch 1 als Vernetzer für Polyolkomponenten in Einkomponenten-Polyurethan-Einbrennsystemen.

10. Verwendung der blockierten Polyisocyanate gemäß Anspruch 1 zur Herstellung von Elastomeren.

11. Lacke, Farben und Klebstoffe enthaltend blockierte Polyisocyanate gemäß Anspruch 1.

12. Wässrige Dispersionen enthaltend blockierte Polyisocyanate gemäß Anspruch 1.

**13.** Lösungen blockierter Polyisocyanate gemäß Anspruch 1 in organischen Lösemitteln.

**14.** Verfahren zur Beschichtung von Substraten, **dadurch gekennzeichnet, dass** Beschichtungsformulierungen enthaltend blockierte Polyisocyanate gemäß Anspruch 1 auf ein Substrat aufgebracht werden und die Beschichtung anschließend bei Temperaturen von 90 bis 160°C bzw. Peak Temperaturen von 130 bis 300°C eingebrannt werden.

## Claims

**1.** Blocked polyisocyanates of the Formula (I)

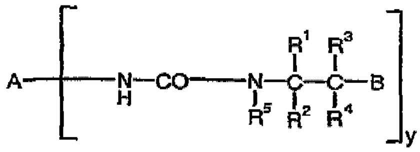 (I),

in which independently of one another

$R^1$-$R^4$ may be the same or different, and denote hydrogen, $C_1$-$C_6$-alkyl or cycloalkyl,
$R^5$ denotes $C_1$-$C_{10}$-alkyl or $C_3$-$C_{10}$-cycloalkyl,
y denotes a number from 2 to 8,
A denotes the radical of an isocyanate heaving the functionality y,
B represents

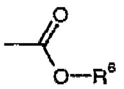 , 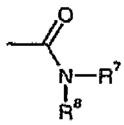 , 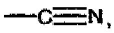 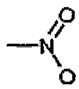 , 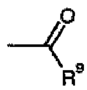

where independently of one another $R^6$-$R^8$ may be the same or different, and denote $C_1$-$C_6$-alkyl and/or $C_3$-$C_6$-cycloalkyl and
$R^9$ denotes hydrogen, $C_1$-$C_6$-alkyl or $C_3$-$C_6$-cycloalkyl.

**2.** Blocked polyisocyanates according to Claim 1, **characterized in that** $R^5$ represents an amyl, isopropyl, isobutyl or tert-butyl radical.

**3.** Blocked polyisocyanates according to Claim 1, **characterized in that** $R^1$ represents a methyl radical and $R^2$, $R^3$ and $R^4$ represent a hydrogen atom.

**4.** Blocked polyisocyanates according to Claim 1, **characterized in that** $R^3$ represents a methyl radical and $R^1$, $R^2$ and $R^4$ represent a hydrogen atom.

**5.** Blocked polyisocyanates according to Claim 1, **characterized in that** $R^1$, $R^7$, $R^3$ and $R^4$ represent a hydrogen atom.

**6.** Blocked polyisocyanates according to Claim 1, **characterized in that** both blocked polyisocyanate groups and free hydroxy groups are present in one molecule.

**7.** Process for the preparation of the blocked polyisocyanates of the formula (I) according to Claim 1, **characterized in that** polyisocyanates of the general formula (II)

$$A\text{-}[\text{-}N{=}C{=}O]_y \qquad (II),$$

in which A and y have the meaning given for formula (I) in Claim 1,
are reacted with secondary amines of the general formula (III)

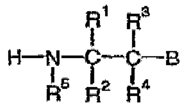 (III),

in which $R^1$-$R^5$ and B have the meaning given for formula (I) in Claim 1.

**8.** Process according to Claim 7, **characterized in that** the blocking agents (III) immediately after their preparation, in the solvent used for their preparation and without further purification, are reacted with the polyisocyanates of the general formula (II),

**9.** Use of the blocked polyisocyanates according to Claim 1 as crosslinkers for polyol components in one-component polyurethane stoving systems.

**10.** Use of the blocked polyisocyanates according to Claim 1 for producing elastomers.

**11.** Varnishes, paints and adhesives comprising blocked polyisocyanates according to Claim 1.

**12.** Aqueous dispersions comprising blocked polyisocyanates according to Claim 1.

**13.** Solutions of blocked polyisocyanates according to Claim 1 in organic solvents.

**14.** Process for coating substrates, **characterized in that** coating formulations comprising blocked polyisocyanates according to Claim 1 are applied to a substrate and the coating is subsequently stoved at temperatures of 90 to 160°C and peak temperatures of 130 to 300°C.

## Revendications

**1.** Polyisocyanates bloqués de formule (I)

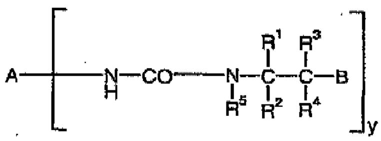 (I),

dans laquelle, indépendamment les uns des autres

$R^1$-$R^4$ peuvent être identiques ou différents et représentent un atome d'hydrogène, un groupe alkyle en $C_1$-$C_6$ ou cycloalkyle,
$R^5$ représente un groupe alkyle en $C_1$-$C_{10}$, cycloalkyle en $C_3$-$C_{10}$,
y représente un nombre valant de 2 à 8,
A représente le reste d'un isocyanate de fonctionnalité y,
B représente

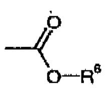, 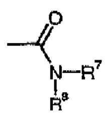, 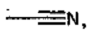, 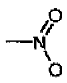, 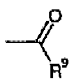

indépendamment les uns des autres

$R^6$-$R^8$ pouvant être identiques ou différentes, et représentant un groupe alkyle en $C_1$-$C_6$ et/ou cycloalkyle en $C_3$-$C_6$ et
$R^9$ représentant un atome d'hydrogène, un groupe alkyle en $C_1$-$C_6$ ou cycloalkyle en $C_3$-$C_6$.

2. Polyisocyanate bloqués selon la revendication 1, **caractérisés en ce que** $R^5$ représente un radical amyle, isopropyle, isobutyle ou tert-butyle.

3. Polyisocyanate bloqués selon la revendication 1, **caractérisés en ce que** $R^1$ représente un radical méthyle et $R^2$, $R^3$, $R^4$ représentent un atome d'hydrogène.

4. Polyisocyanate bloqués selon la revendication 1, **caractérisés en ce que** $R^3$ représente un radical méthyle et $R^1$, $R^2$, $R^4$ représentant un atome d'hydrogène.

5. Polyisocyanates bloqués selon la revendication 1, **caractérisés en ce que** $R^1$, $R^2$, $R^3$ et $R^4$ représentent un atome d'hydrogène.

6. Polyisocyanates bloqués selon la revendication 1, **caractérisés en ce que** dans une molécule sont présents aussi bien des groupes polyisocyanates bloqués que des groupes hydroxy libres.

7. Procédé pour la préparation des Polyisocyanates bloqués de formule (I) selon la revendication 1, **caractérisé en ce qu'**on fait réagir des polyisocyanates de formule générale (II)

$$A\text{-}[\text{-}N=C=O]_y \qquad \text{(II)},$$

dans laquelle A et y ont la signification indiquée pour la formule (I) dans la revendication 1,
avec des amines secondaires de formule générale (III)

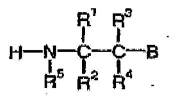 (III),

dans laquelle $R^1$-$R^5$ et B ont la signification indiquée pour la formule (I) dans la revendication 1.

8. Procédé selon la revendication 7, **caractérisé en ce qu'**on fait réagir avec les polyisocyanates de formule générale (II) les agents de blocage (III) immédiatement après leur préparation, dans le solvant utilisé pour leur réparation et sans les purifier davantage.

9. Utilisation des polyisocyanates bloqués selon la revendication 1, en tant qu'agents de réticulation pour composants polyol dans des systèmes de polyuréthane monocomposants à séchage au four.

10. Utilisation des polyisocyanates bloqués selon la revendication 1, pour la production d'élastomères.

11. Peintures, vernis et adhésifs contenant des polyisocyanates bloqués selon la revendication 1.

12. Dispersions aqueuses contenant des Polyisocyanates bloqués selon la revendication 1.

13. Solutions de Polyisocyanates bloqués selon la revendication 1 dans des solvants organiques.

14. Procédé pour l'enduction de subjectiles, **caractérisé en ce qu'**on applique sur un subjectile des compositions de revêtement contenant des polyisocyanates bloqués selon la revendication 1 et on fait ensuite sécher au four le revêtement à des températures de 90 à 160 °C ou à des températures maximale de 130 à 300 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0576952 A
- EP 0566953 A
- EP 0159117 A
- US 4482721 A
- WO 9712924 A
- EP 0744423 A
- EP 0096210 A
- EP 00713871 A
- EP 0157291 A
- EP 0427028 A


### In der Beschreibung aufgeführte Nicht-Patentliteratur


- **Wicks, Z.** *Progress in Organic Coatings,* 1975, vol. 3, 73-99
- **Wicks, Z.** *Progress in Organic Coatings,* 1981, vol. 9, 3-28
- **D. A. Wicks ; Z. W. Wicks.** *Progress in Organic Coatings,* 1999, 148-172
- Organikum. Deutscher Verlag, 1993, 523-525
- **Houben-Weyl.** Methoden der organischen Chemie. G. Thieme-Verlag, 1963, vol. XIV/2, 1-47